(19) **Europäisches Patentamt**

**European Patent Office**

**Office européen des brevets**

(11) **EP 1 072 446 B1**

(12) **EUROPEAN PATENT SPECIFICATION**

(45) Date of publication and mention
of the grant of the patent:
**25.10.2006 Bulletin 2006/43**

(51) Int Cl.:
**B60C 11/14** (2006.01)     **B60C 11/00** (2006.01)

(21) Application number: **00306344.3**

(22) Date of filing: **26.07.2000**

(54) **Studless tyre**

Spikeloser Reifen

Bandage pneumatique sans crampons

(84) Designated Contracting States:
**AT CH FI LI SE**

(30) Priority: **27.07.1999 JP 21212999**

(43) Date of publication of application:
**31.01.2001 Bulletin 2001/05**

(73) Proprietor: **Sumitomo Rubber Industries, Ltd.
Kobe-shi,
Hyogo-ken (JP)**

(72) Inventors:
• **Uchida, Mamoru
Akashi-shi,
Hyogo-ken (JP)**
• **Tahara, Narihiro
Akashi-shi,
Osaka-fu (JP)**
• **Kikuchi, Naohiko
Kobe-shi,
Hyogo-ken (JP)**
• **Ohta, Takeshi
Toyonaka-shi,
Osaka-fu (JP)**

(74) Representative: **Manitz, Finsterwald & Partner
GbR
Postfach 31 02 20
80102 München (DE)**

(56) References cited:
**GB-A- 1 462 683          US-A- 5 591 279**

• **PATENT ABSTRACTS OF JAPAN vol. 1998, no.
10, 31 August 1998 (1998-08-31) & JP 10 129214
A (SUMITOMO RUBBER IND LTD), 19 May 1998
(1998-05-19)**
• **PATENT ABSTRACTS OF JAPAN vol. 018, no. 220
(M-1595), 20 April 1994 (1994-04-20) & JP 06
016004 A (RAILWAY TECHNICAL RES INST;
OTHERS: 01), 25 January 1994 (1994-01-25)**

**Description**

The present invention relates to a tyre that is excellent especially in performance on snow or ice covered roads.

Conventionally, when driving an automobile on a snow covered road in winter, safety on snow or ice road was secured by using studded tyres having spikes thereon or tyre chains mounted around the outer periphery of the tyre. However, the road is apt to be worn and damaged by using studded tyres or tyres having chains, and this produces dust particles to bring about pollution and cause a great environmental problem. Therefore, to solve the safety problem and the environmental problem, studless tyres have been widely used.

As a technique for improving the performance of the studless tyre on ice or snow covered roads, Japanese Unexamined Patent Publication No: 4-110211/1992, for example, discloses a technique in order to improve the frictional force on ice road, i.e. to improve the adhesive force and frictional force at low temperature. The method is to mix non-metal staple fibres such as cellulose staple fibres with a rubber compound which is excellent in low temperature characteristics, i.e. flexible even at low temperature. The rigidity of a tyre block is controlled by an elasticity difference of the rubber at the block surface, a wall surface portion and an inside portion of the tyre generated by orientation of the staple fibre along a block portion surface of a tread portion. This is intended to improve the adhesion force and the friction force to the road surface. However, if the staple fibres are mixed with the tread rubber and a tyre is formed by extrusion, the mixed staple fibres are oriented along the machine direction, i.e. in the circumferential direction of the tyre, and if the composition is moulded and vulcanised into a tyre, the majority of staple fibres of the tread rubber which contacts the road surface are oriented in the circumferential direction of the tyre, which reinforces and hardens the rubber surface resulting in a loss of adhesion of the tyre when the tyre contacts an uneven spot on the road.

Since most of the staple fibres are oriented in the circumferential direction of the tyre, there are also problems in that the effect of digging and scratching friction is not sufficient, and the abrasion resistance becomes low.

Japanese Unexamined Patent Publication No. 2-2174602/1990 discloses a studless tyre and a method for preparing the same, in which powders having relatively large particles or staple fibres are oriented not in the circumferential direction of the tread but in the thickness direction. This is a technique for improving digging friction by scratching the ice and snow road surface with the particles and the staple fibres, but it is necessary to cause the staple fibres and particles from the tread rubber surface to protrude for the digging effect. Steel staple fibres are used in a disclosed example. However, if hard staple fibres such as metal are mixed, the rubber is hardened, the abrasion resistance between the rubber and the metal is largely different, and the contact area is lowered by disturbing the contact of the rubber with the road surface according to the protruded metal staple fibres to reduce adhesion force and friction force, and thereby the performance on ice and snow covered roads is deteriorated.

As described above, there exists no tyre, which improves or balances adhesion, adhesion friction, digging friction, scratching friction and abrasion resistance, and has excellent performance on ice and snow covered roads.

JP 10 129 214 A discloses an off-road tyre comprising short fibres of organic material in the rubber block extending in a radial direction of the tyre to improve chunking resistance and edge chipping resistance of the rubber block. JP 06 016 004 A discloses a tire for linear motorcars and airplanes also comprising organic staple fibres arranged along the radial direction of the tire. The fibres are used to restrain the abrasion of the rubber tyre without increasing body weight.

The present invention has the object of solving these problems.

Accordingly the present invention relates to a studless tyre, wherein non-metal inorganic staple fibres having an average fibre diameter of 1 to 100 $\mu$m and an average length of 0.1 to 5 mm which are dispersed in a diene rubber in such a way that the non-metal staple fibres are oriented in a thickness direction of a tread, a complex elastic modulus $E1$ in the thickness direction of the tread and an elastic module $E2$ in a circumferential direction of the tyre measured at 25°C satisfy the equation $1.1 \leq E1 / E2 \leq 4$ and the hardness of the tread rubber measured at -10°C according to JIS A is 45 to 75.

In the above mentioned studless tyre, the non-metal inorganic staple fibres are preferably glass fibres or carbon fibres.

By orienting the non-metal fibres in the thickness direction of the tyre tread, adhesion, adhesion friction, digging friction and scratching friction between tyre and road surface are improved or balanced. As a result it becomes possible to largely improve the performance on ice and snow covered roads.

By orienting the non-metal staple fibres in the thickness direction of the tread, there becomes no influence on orientation direction of the staple fibres on the surface of the tyre tread rubber.

Flexibility for following an uneven road surface is kept thus improving adhesion and adhesion friction. On the tyre surface, portions locally having high contact pressure are formed by the non-metal staple fibres oriented in the thickness direction. With these portion, for example, water film generated between frozen road surface and tyre surface at tyre spinning is pushed away, adhesion and adhesion friction are improved, and digging and scratching friction are also improved at the same time.

In the present invention, there is provided a pneumatic tyre especially excellent in running performance on ice and snow covered roads, in which adhesion, adhesion friction and digging friction are improved by blending a tread rubber with staple fibres having specific kind and shape, and specifying a ratio of the elastic modulus in the thickness direction to the elastic modulus in the circumferential direction of the tyre made of the tread rubber.

The diameter of the staple fibres to be mixed is preferably 1 to 100 $\mu$m, and more preferably 3 to 50 $\mu$m. If the diameter of the staple fibres is smaller than 1 $\mu$m, staple fibres oriented in the thickness direction of the tread can not sufficiently form the portion having high contact pressure on the tread surface, since the area of the staple fibres is small. On the other hand, if the diameter of the staple fibres is more than 100 $\mu$m, adhesion and adhesion friction do not sufficiently work, since the force for pushing away the water film between a frozen road surface and tyre tread surface is inferior.

The length of the staple fibres is preferably 0.1 to 5 mm, and more preferably 0.1 to 3 mm. If the length of the staple fibres is shorter than 0.1 mm, the staple fibres are apt to be dropped from the tread surface during running, and the effect of pushing away the water film is deteriorated. On the other hand, if the length is longer than 5 mm, it becomes difficult to disperse and orientate the staple fibres, and workability of the rubber is lowered.

Examples of the diene rubber used in the present invention are a natural rubber, an isoprene rubber, a styrene-butadiene rubber, a butadiene rubber, a chloroprene rubber and an acrylonitrile butadiene rubber.

A ratio of the complex elastic modulus E1 in the thickness direction of the tread to the elastic module E2 in a circumferential direction of the tyre is preferably 1.1 to 4, and more preferably 1.2 to 3.5. If the ratio is smaller than 1.1, it is not possible to sufficiently form the portion having high contact pressure on the contacting surface. As a result, the effect of removing water film between the tread surface and the contacting surface becomes low, and adhesion, adhesion friction, scratching friction and digging friction are not improved. If the E1/E2 is greater than 4, rigidity of the tread block of the tyre becomes excessively high, the tread rubber surface can not follow an ice or snow covered road surface, and adhesion and adhesion friction become low.

As a material for the staple fibres, non-metal staple fibre is chosen to ensure contact between the tread and the ice and snow surface, so as not to damage the road surface and to provide only a small difference of abrasion rate compared with the rubber. For the non-metal staple fibres, non-metal inorganic staple fibres are preferable. Further, glass fibres or carbon fibres are preferably used. These are broken into suitable short lengths during the process of mixing the rubber from the viewpoint that it is easy to disperse and orient the fibres, and to obtain a rubber having a suitable ratio of the complex elastic modulus.

Tread rubber hardness measure at -10°C is preferable 45 to 75, and more preferably 45 to 60. If the hardness measured at -10°C is smaller than 45, the rubber is excessively flexible at room temperature, and the steering stability on a dry road surface, for example, is deteriorated. On the other hand, if the hardness is greater than 75, the rubber itself becomes excessively hard, the contact property between the tread rubber surface and an ice and snow road surface becomes inferior thus lowering the rubbing performance on ice and snow covered roads. Here, the tread rubber hardness means hardness in the thickness direction of the tread.

The amount of the non-metal staple fibre is preferably 2 to 28 parts by weight based on 100 parts by weight of the diene rubber, more preferably 3 to 20 parts by weight. If the amount is smaller than 2 parts by weight, the amount of staple fibres forming the contact pressure on the tread surface becomes too small and the effect of removing the water film is not sufficient. On the other hand, if the amount is greater than 28 parts by weight, the tread block rigidity becomes excessively high, and the tread rubber surface can not follow an ice and snow road surface thus causing lower adhesion and adhesion friction.

Further aspects of the invention will be apparent from the following description, by way of example only, of an embodiment in conjunction with the attached drawings in which:

Figure 1(a) is a cross-sectional view of a prior art tyre tread in which fibres are oriented in the circumferential direction;
Figure 1(b) is a cross-sectional view of a tyre tread in which fibres are oriented in the tread thickness direction; and
Figure 2 is an explanatory view showing a method of preparing the tread of the present invention.

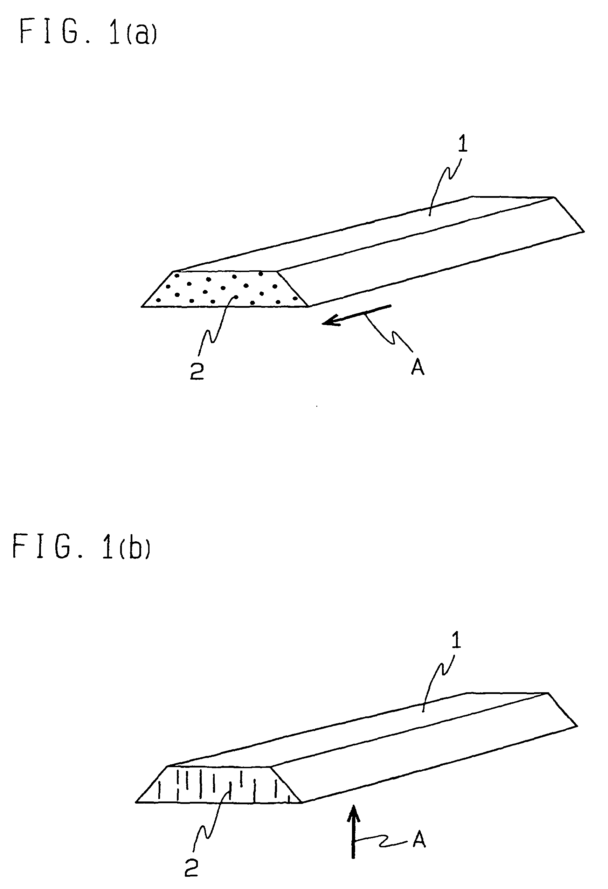

The bead strip of Figure 1(a) has reinforcement fibres 2 lying along the strip, i.e. circumferentially of the tyre. The tread strip of Figure 1(b) however has the fibres arranged so as to lie in the direction of the thickness of the tread.

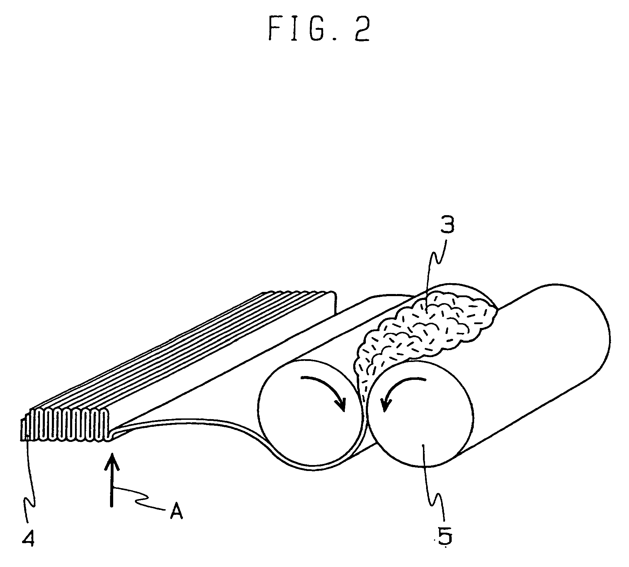

As a method of forming the tread, a conventional extrusion process is employed. When the tread is formed merely by extrusion, the staple fibres are oriented in the circumferential direction of the tread as shown in Figure 1(a). As shown in Figure 2, if the rubber composition containing staple fibres is rolled by using a calender roll, and the obtained sheet is folded, it is possible to prepare a tyre in which the staple fibres are oriented in the thickness direction of the tread as shown in Figure 1(b).

Next, the present invention is explained in more detail based on Examples, but the present invention is not limited thereto.

## EXAMPLES

Raw materials used in Examples and Comparative Examples as well as evaluating method of the obtained tyres are collectively shown below.

| | |
|---|---|
| Natural Rubber | RSS#3 grade |
| High sys polybutadiene | UBEPOL BR150B available from Ube Industries Ltd |
| SBRN9521 | Nipol 9521 available from Nippon Zeon Co Ltd |
| SBR1502 | SBR1501 available from Sumitomo Chemical Co Ltd |
| N220 | SHO BLACK N220 available from Showa Cabot Co Ltd |
| Silica Nipsil VN3 | Nipsil VN3 available from Nippon Silica Co Ltd |
| Paraffin oil | Diana process oil available from Idemitsu Kousan Co Ltd |
| Wax | SUN NOC N available from Ohuchi Shinko Kagaku Kogyo Co Ltd |
| Stearic acid | available from NOF Corporation |
| Zinc white | 2 grade of zinc oxide available from Mitsui Mining & Smelting Co Ltd |
| Glass fibre | average fibre diameter of 11 $\mu$m, cut length 3 mm |
| Carbon fibre | average fibre diameter of 14.5 $\mu$m, cut length of 6 mm |
| Silane coupling agent | Si69 (bis (3-triethoxysilylpropyl) tetrasulfide) available from Degusa Co Ltd |
| Curing accelerator | NOCCELER CZ available from Ohuchi Shinko Kagaku Kogyo Co Ltd |

Average length of staple fibres in rubber

After an unvulcanised rubber was dissolved in a solvent such as methyl ethyl ketone, naphtha or hexane, twenty lengths of fibres contained in insoluble residue were measured to define the average value thereof as an average length.

Complex Elastic Modulus

The complex elastic modulus was measured by using a viscoelasticity spectro meter made by Iwamoto Seisakusho under the predetermined measuring conditions (at 25°C, measuring frequency of 10Hz, initial strain of 10%, dynamic strain of 1%.

As a sample, a rubber piece having a thickness of 1.0 mm, a width of 4 mm and a length of 5 mm was cut out from the tyre tread portion and used for measurement.

Braking performance on ice

Tyre size: 195/65R15

A Japanese FR vehicle of 2,000 CC was used as a test vehicle. The stopping distance from a speed of 30 km/h on an ice covered plate was measured, and the braking performance was calculated from the following equation using Comparative Example 1 as reference.

Stopping distance in Comparative Example 1/(stopping distance)x100

The greater the index becomes, the better the braking performance becomes. Before each test was carried out, the vehicle was run for 200 km in each case.

Abrasion resistance

Tyres having the size of 195/65R15 were mounted to a Japanese FF vehicle and the vehicle was run for 4,000 km. Then the depth of groove of each tyre tread portion was measured, and the running distance in which the depth of the tyre groove was reduced to 1 mm was calculated and indexed according to the following formula:

```
(running distance in which depth of tyre groove is
reduced to 1 mm)/(running distance in which depth of
tyre groove in Comparative Example 1 is reduced to 1
mm) x 100.
```

The greater the index becomes, the better the abrasion resistance becomes.

Hardness of rubber

The hardness of the rubber was measured according to JIS A at a temperature of 10°C.

Examples 1 to 2 and Comparative Examples 1 to 5

By using the rubber compositions shown in Table 1, a tyre in which the staple fibres were oriented in the circumferential direction of the tread was formed using a conventional extrusion method. Also a tyre in which the staple fibres were oriented in the thickness direction of the tread was formed using the method shown in Figure 2. In the method shown in Figure 2, the tread shown in the drawing was formed by using a rubber composition blended with staple fibres which was rolled by a calender roll into a thickness of 1 mm and a width of 1.5 m, and then by repeating folding it.

By using the obtained tyre, the evaluations were carried out. The result is shown in Table 1.

TABLE 1

| Examples | Com. Ex. No 1 | Com. Ex. No.2 | Com. Ex. No. 3 | Ex. No. 1 | Ex. No. 2 | Com. Ex. No.4 | Com. Ex. No.5 |
|---|---|---|---|---|---|---|---|
| Natural rubber | 60 | 60 | 60 | 60 | 60 | 60 | - |
| High-sys polybutadiene | 40 | 40 | 40 | 40 | 40 | 40 | - |
| SBRN9521 | - | - | - | - | - | - | 73.3 |
| SBR1502 | - | - | - | - | - | - | 53 |
| N220 | 45 | 45 | 45 | 45 | 45 | 45 | 45 |
| Silica Nipsil VN3 | 20 | 20 | 20 | 20 | 20 | 20 | 20 |
| Paraffin oil | 20 | 20 | 25 | 25 | 25 | 40 | - |
| Wax | 2 | 2 | 2 | 2 | 2 | 2 | 2 |
| Antioxidant | 1.5 | 1.5 | 1.5 | 1.5 | 1.5 | 1.5 | 1.5 |
| Stearic acid | 2 | 2 | 2 | 2 | 2 | 2 | 2 |
| Zinc white | 3 | 3 | 3 | 3 | 3 | 3 | 3 |
| Glass fibre | - | - | 5 | 5 | - | 30 | 5 |
| Carbon black | - | - | - | - | 5 | - | - |
| Silane coupling agent | 1.2 | 1.2 | 1.2 | 1.2 | 1.2 | 1.2 | 1.2 |
| Sulfur | 1.5 | 1.5 | 1.5 | 1.5 | 1.5 | 1.5 | 1.5 |
| Curing accelerator | 1 | 1 | 1 | 1 | 1 | 1 | 1 |
| Average length of staple fibres in rubber (mm) | | | 0.5 | 0.5 | 0.5 | 0.5 | 0.5 |
| Method for forming tread | Conventional extrusion | Method of Fig.2 | Conventional extrusion | Method of Fig.2 | Method of Fig.2 | Method of Fig. 2 | Method of Fig. 2 |

(continued)

| Examples | Com. Ex. No 1 | Com. Ex. No.2 | Com. Ex. No. 3 | Ex. No. 1 | Ex. No. 2 | Com. Ex. No.4 | Com. Ex. No.5 |
|---|---|---|---|---|---|---|---|
| Complex elastic modulus E1 | 4.3 | 4.6 | 4.3 | 6.1 | 6 | 16.6 | 8.5 |
| Complex elastic modulus E2 | 4.5 | 4.4 | 6.0 | 4.3 | 4.1 | 4.0 | 4.0 |
| E1/E2 | 0.96 | 1.05 | 0.72 | 1.42 | 1.46 | 4.15 | 1.7 |
| Braking performance on Ice | 100 | 100 | 105 | 125 | 126 | 95 | 75 |
| Abrasion resistance | 100 | - | 90 | 100 | 103 | 92 | 95 |
| Hardness of rubber (-10°C) | 59 | 60 | 60 | 61 | 62 | 66 | 78 |

Examples 1 to 2 show the test results for the tyre according to the invention which was obtained using a tyre tread by mixing staple fibres defined in the patent claims, and folding and superposing a rubber sheet having a thickness of 1 mm according to the method of forming a tyre tread shown in Figure 2 in order to orient the staple fibres in the thickness direction of the tread.

In Comparative Examples 1 to 2 in which the staple fibres were not mixed, Comparative Example 3 in which staple fibres are used but the staple fibres were not oriented in the thickness direction of the tread, the complex elastic modulus in the thickness direction of the tyre and the complex elastic modulus in the circumferential direction of the tyre were out of the range defined in the patent claim, Comparative Example 4 in which the staple fibres ere oriented in the thickness direction of the tread but the complex elastic modulus was out of the range defined in the patent claim, and Comparative Example 5 in which the tread hardness at -10°C was out of the range defined in the patent claim, it can be seen that the performance on ice and snow covered roads and the abrasion resistance were inferior to the Examples used for comparison.

According to the present invention, it is possible to obtain a tyre having excellent performance on ice and snow covered roads, which improves or balances adhesion, adhesion friction, digging-up friction, scratching friction and abrasion friction.

## Claims

1.   A studless tire, wherein non-metal inorganic staple fibers (2) having an average fiber diameter of 1 to 100 $\mu$m and an average length of 0.1 to 5 mm are dispersed in a diene rubber in such a way that the non-metal inorganic staple fibers are oriented in the thickness direction of the tread (1), the complex elastic modulus E1 in the thickness direction of the tread (1) and the complex elastic modulus E2 in a circumferential direction of the tire measured at 25°C satisfy the equation $1.1 \leq E1/E2 \leq 4$, and the hardness of the tread rubber measured at -10°C according to JIS A is 45 to 75.

2.   A studless tire of claim 1, wherein the non-metal inorganic staple fibers are glass fibers or carbon fibers.

## Patentansprüche

1.   Spikeloser Reifen, in welchem nicht-metallische anorganische Stapelfasern (2), die einen Durchschnittsfaserdurchmesser von 1 bis 100 $\mu$m und eine Durchschnittslänge von 0,1 bis 5 mm haben, in einem Diengummi in einer solchen Weise dispergiert sind, daß die nicht-metallischen anorganischen Stapelfasern in der Dickenrichtung der Lauffläche (1) orientiert sind, der komplexe Elastizitätsmodul E1 in der Dickenrichtung der Lauffläche (1) und der komplexe Elastizititätsmodul E2 in der Umfangsrichtung des Reifens, gemessen bei 25°C, die Gleichung $1,1 \leq E1/E2 \leq 4$ erfüllen, und die Härte des Laufflächengummis, gemessen entsprechend JIS A bei -10°C, 45 bis 75 beträgt.

2.   Spikeloser Reifen von Anspruch 1, in welchem die nicht-metallischen anorganischen Stapelfasern Glasfasern oder Kohlefasern sind.

**Revendications**

1. Pneu sans crampon, dans lequel des fibres discontinues inorganiques non métalliques (2) ayant un diamètre de fibre moyen de 1 à 100 $\mu$m et une longueur moyenne de 0,1 à 5 mm sont dispersées dans un caoutchouc de diène d'une manière telle que les fibres discontinues inorganiques non métalliques sont orientées dans la direction d'épaisseur de la chape (1), le module élastique complexe E1 dans la direction d'épaisseur de la chape (1) et le module élastique complexe E2 dans une direction circonférentielle du pneu mesurés à 25 °C satisfont l'équation $1,1 \leq E1 / E2 \leq 4$ et la dureté du caoutchouc de la chape mesurée à - 10 °C selon le JIS A est 45 à 75.

2. Pneu sans crampon selon la revendication 1, dans lequel les fibres discontinues inorganiques non métalliques sont des fibres de verre ou des fibres de carbone.

FIG. 1(a)

FIG. 1(b)

# FIG. 2